# DEMANDE DE BREVET EUROPEEN

(11) **EP 1 415 926 A1**
(43) Date de publication de la demande: **06.05.2004**
(21) Numéro de dépôt: 03356167.1
(22) Date de dépôt: 29.10.2003
(51) Int. Cl.: B65D 5/74, B29C 45/00, B65D 101/00

(54) **Dispositif d'ouverture refermable et son procédé de moulage**

(30) Priorité: 30.10.2002 FR 0213600
(71) Demandeur: Tetra Laval Holdings & Finance S.A., 1009 Pully (CH)
(72) Inventeur: Antier, Grégory, 01600 Trevoux (FR); Odet, Philippe, 69830 Saint-Georges-de-Reneins (FR)
(74) Mandataire: Myon, Gérard

(57) **Abrégé**

Ce dispositif d'ouverture refermable (2) comprend un support (10) délimitant un orifice traversant (14), un bouchon (20) adapté pour être fixé de manière amovible au support (10) de façon à obturer l'orifice, et un organe de découpe (24) comportant des moyens de découpe (28) et déplaçable par rapport au support (10) de façon à faire coopérer ces moyens de découpe et une partie (6) détachable ou sécable de l'emballage (1) pour mettre en communication l'intérieur de l'emballage et l'orifice traversant (14). Le support (10) et l'organe de découpe (24) sont moulés d'un seul tenant dans une configuration pré-assemblée dans laquelle ils sont reliés par des pontets sécables.

Le dispositif comporte en outre un bec verseur (42) formé par un chant du support (10) et un régulateur de débit (70) logé à l'intérieur de l'organe de découpe (24).

Application, notamment, à un emballage destiné à contenir de l'huile alimentaire.

## Description

La présente invention concerne un dispositif d'ouverture refermable pour un emballage étanche destiné à contenir un produit liquide. L'invention concerne également un procédé de moulage d'un tel dispositif.

De nombreux produits alimentaires liquides, ou plus généralement à même d'être déversés, tels que du jus de fruits, du lait, du vin, de la sauce tomate, etc. sont actuellement vendus dans des emballages étanches, formés d'une matière stérilisée et/ou stérilisable. Un exemple représentatif d'un tel emballage est l'emballage appelé «TETRA BRIK » (marque déposée) qui est formé de plusieurs couches laminées de matériaux différents choisis généralement parmi le carton, le plastique et l'aluminium.

Pour ouvrir de tels emballages, il est connu de ménager à l'angle d'un rabat de l'emballage une ligne de prédécoupage permettant de détacher manuellement une partie de ce rabat. Cependant, une fois que l'emballage est ouvert de la sorte, il est impossible de le refermer de manière étanche, l'emballage devant être manipulé avec précaution pour éviter le déversement accidentel du produit liquide restant à l'intérieur de l'emballage.

Dans EP-A-1 088 764, la Demanderesse a proposé de munir un tel emballage d'un dispositif d'ouverture refermable du type comprenant à la fois un support qui délimite un orifice traversant et qui est adapté pour être solidarisé à une paroi de l'emballage en recouvrant une partie détachable ou sécable de cette paroi, un bouchon adapté pour être fixé de manière amovible au support de façon à obturer l'orifice, et un organe de découpe de forme sensiblement tubulaire, qui comporte des moyens de découpe et qui, en fonctionnement, est déplaçable par rapport au support de façon à faire coopérer les moyens de découpe et la partie détachable ou sécable de l'emballage pour mettre en communication l'intérieur de l'emballage et l'orifice traversant, le support et l'organe de découpe étant moulés d'un seul tenant dans une configuration pré-assemblée dans laquelle le support et l'organe de découpe sont reliés l'un à l'autre par des moyens de liaison sécables. L'organe de découpe de ce dispositif est actionné par le bouchon, par l'intermédiaire de moyens de transmission angulaire unidirectionnelle de sorte que, lorsque le bouchon est dégagé du support lors de la première ouverture de l'emballage, l'organe de découpe est entraîné suivant un mouvement en spirale par rapport au support pour venir détacher ou découper la partie détachable ou découpable de l'emballage. L'organe de découpe porte à cet effet sur sa face extérieure des filets en spirale qui coopèrent avec des filets complémentaires portés par la face intérieure du corps du support. Un des intérêts du dispositif décrit dans EP-A-1 088 764 est qu'il est obtenu par l'assemblage d'uniquement deux pièces, à savoir le bouchon d'une part et l'ensemble support/organe de découpe moulé d'un seul tenant d'autre part.

Dans le cas où l'emballage contient de l'huile, ou plus généralement tout corps graisseux, visqueux et/ou gluant, les dispositifs d'ouverture refermables actuels, dont le dispositif décrit dans le document précité, présente l'inconvénient de se salir rapidement, généralement dès la première utilisation. Les corps graisseux, visqueux et/ou gluant forment en effet, à la fin de leur déversement, des gouttes qui restent en périphérie du goulot formé par la partie d'extrémité libre du corps délimitant l'orifice de déversement. Cet inconvénient est d'autant plus marqué lorsque l'utilisateur souhaite obtenir un fort débit de déversement, par exemple en inclinant fortement l'emballage. De par la viscosité de ces produits, de fortes turbulences se forment dans le flux d'écoulement, provoquant des éclaboussures et une moindre précision de déversement. Après seulement quelques utilisations, ce genre de dispositifs se retrouve encrassé et les coulures de produit qui se forment le long de l'emballage font courir le risque à l'utilisateur d'échapper l'emballage.

Le but de la présente invention est de proposer un dispositif du type défini ci-dessus qui permette de déverser proprement des liquides graisseux, visqueux et/ou gluants, tels que de l'huile.

A cet effet, l'invention a pour objet un dispositif tel que défini à la revendication 1.

Le bec verseur et le régulateur de débit permettent à la fois d'assurer un écoulement régulier et précis du liquide et de réduire la formation de gouttes et de coulures responsables de l'encrassement du dispositif.

Suivant une caractéristique avantageuse de ce dispositif, il comporte en outre des moyens d'entraînement de l'organe de découpe par rapport au support sur une course comprenant, d'une part, un premier mouvement de rotation autour de l'axe longitudinal de l'organe de découpe et, d'autre part, un second mouvement de translation sensiblement rectiligne.

L'entraînement de l'organe de découpe suivant le premier mouvement de rotation permet de dégager facilement l'organe de découpe lors du premier dévissage du bouchon, tandis que le mouvement rectiligne de translation permet de découper la partie détachable ou sécable de l'emballage sans pour autant devoir former des surfaces de contre-dépouille sur la face intérieure du corps du support, ce qui permet de démouler l'ensemble support/organe de découpe pré-assemblé, sans risque d'endommagement pour cet ensemble.

D'autres caractéristiques de ce dispositif, prises isolément ou selon toutes les combinaisons techniquement possibles, sont énoncées dans les revendications 3 à 9.

L'invention a également pour objet un procédé de moulage d'un dispositif d'ouverture refermable pour un emballage étanche destiné à contenir un produit liquide, tel que défini à la revendication 10.

Des caractéristiques avantageuses de ce procédé sont énoncées aux revendications 11 et 12.

L'invention sera mieux comprise à la lecture de la description qui va suivre, donnée uniquement à titre d'exemple et faite en se référant aux dessins sur lesquels :
- la figure 1 est une vue en perspective d'une partie d'extrémité d'un emballage étanche pour un produit liquide, pourvu d'un dispositif d'ouverture refermable selon l'invention ;
- la figure 2 est une vue éclatée en perspective montrant deux sous-ensembles du dispositif de la figure 2 ;
- la figure 3 est une vue en élévation du dispositif de la figure 2, avant sa solidarisation à l'emballage de la figure 1 qui est partiellement représenté en coupe ;
- la figure 4 est une vue en élévation du dispositif de la figure 2, prise selon la flèche IV indiquée sur la figure 3 ;
- la figure 5 est une coupe selon le plan V-V à la figure 4, montrant le dispositif avant sa solidarisation à l'emballage ; et
- la figure 6 est une coupe selon le plan VI-VI à la figure 4, montrant le dispositif solidarisé à l'emballage de la figure 1.

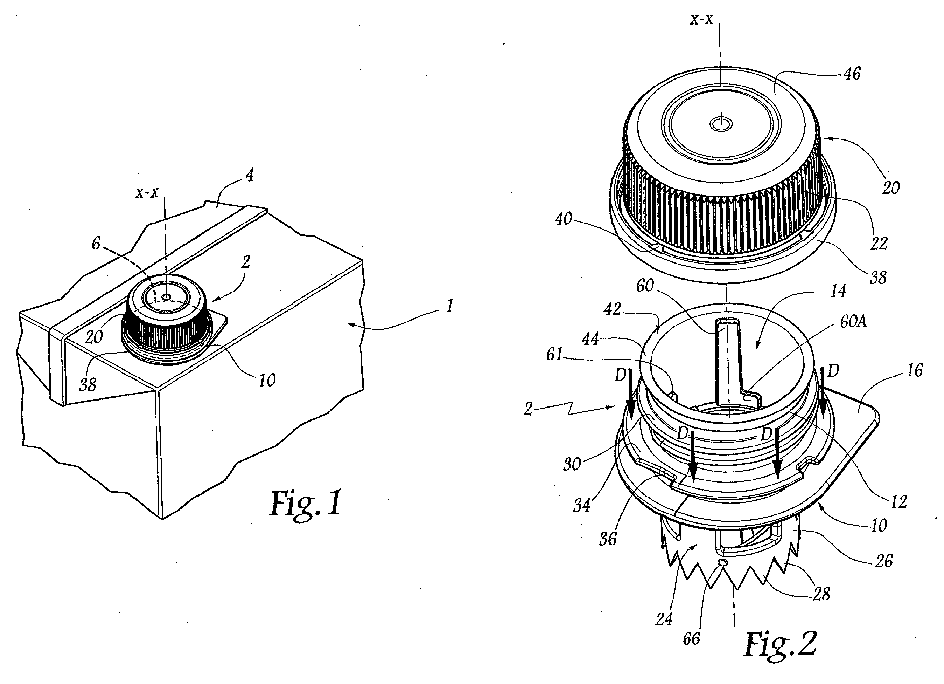

Sur la figure 1 est représenté un emballage étanche aseptique 1 destiné à contenir un produit visqueux apte à être déversé, tel que de l'huile alimentaire. Cet emballage est par exemple un emballage « TETRA BRIK » (marque déposée), formé d'une structure multi-couches comprenant au moins une couche de carton et un film en matière plastique. Il est pourvu d'un dispositif d'ouverture refermable 2 réalisé en matière plastique et adapté pour être solidarisé à l'emballage 1 par toute technique connue, par exemple par collage.

Une paroi 4 de l'emballage 1 destinée à former la paroi supérieure de l'emballage lors de son stockage et de son utilisation, comporte une partie circulaire 6 d'axe X-X, indiquée sur la figure 1 en pointillés gras et recouverte de façon étanche par le dispositif 2 lorsque ce dernier est solidarisé à l'emballage. Cette partie 6 est adaptée pour être percée par le dispositif 2 préalablement à la première utilisation de l'emballage, en se détachant partiellement du reste de la paroi 4 pour permettre l'écoulement du produit depuis l'intérieur de l'emballage via le dispositif 2.

Le dispositif 2, représenté plus en détail sur les figures 2 à 6, comporte essentiellement :
- un support 10 formé d'un corps tubulaire 12 d'axe X-X délimitant intérieurement un orifice traversant 14, et d'une platine 16 s'étendant transversalement à une extrémité du corps 12 et adaptée pour être solidarisée à la paroi 4 de l'emballage 1 ;
- un bouchon 20 formé d'un corps tubulaire 22 d'axe X-X, adapté pour être fixé de manière amovible au support 10 de façon à permettre l'ouverture et la fermeture de l'emballage 1 ; et
- un organe de découpe 24 comportant un corps tubulaire 26 d'axe X-X à une extrémité duquel sont formées des dents 28 à même de détacher au moins partiellement et/ou de découper la partie de paroi 6.

Plus précisément, le corps 12 du support 10 porte sur sa face extérieure des filets 30 sensiblement complémentaires de filets 32 formés sur la face intérieure du corps 22 du bouchon 20, permettant à ce dernier d'être vissé et dévissé par rapport au support 10.

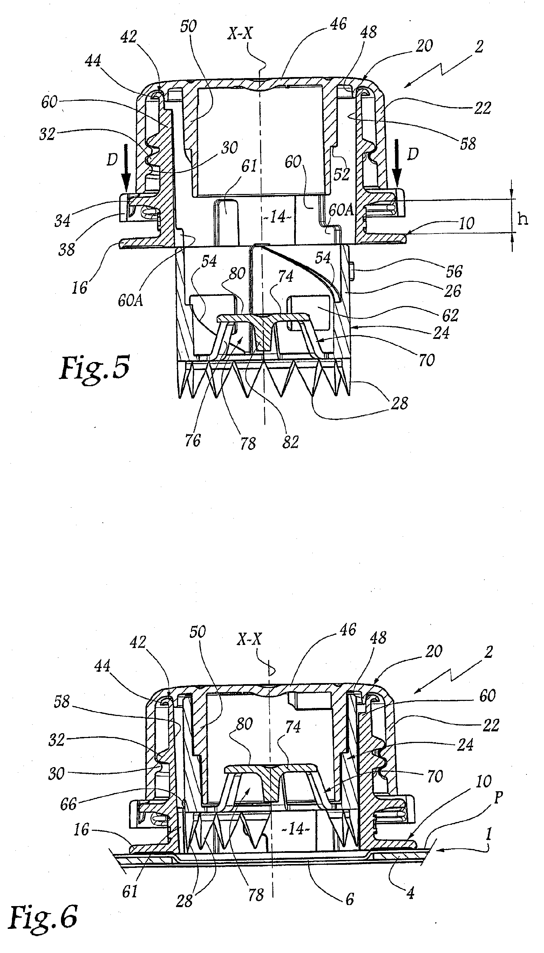

Le corps 12 comporte dans sa partie la plus proche de la platine 16 une collerette 34 radialement en saillie de la face extérieure du corps 12 et qui s'étend sur toute sa périphérie. Cette collerette 34 est disposée à une distance axiale h (figure 5) de la platine 16 et porte des encoches 36. La collerette 34 est destinée à coopérer avec une bague témoin de première utilisation 38 d'axe X-X, reliée au bouchon 20 avant le premier dévissage de celui-ci. Cette bague est de diamètre intérieur légèrement plus grand que le diamètre extérieur de la collerette 34 et de dimension axiale légèrement inférieure à la distance h. Des pontets sécables 40 reliant la bague 38 au corps 22 du bouchon 20 sont initialement reçus à l'intérieur des encoches 36 et, lors du premier dévissage du bouchon 20, sont entraînés radialement vers l'extérieur par les surfaces des encoches formant rampe, provoquant la rupture des pontets et la libération de la bague 38 reçue alors axialement entre la collerette 34 et la platine 16.

Le chant d'extrémité libre du corps 12 forme un bec verseur 42 qui s'étend sur toute la périphérie du corps 12 et comporte une lèvre arrondie 44 s'étendant radialement en saillie vers l'extérieur par rapport au reste du corps 12. Cette lèvre est adaptée pour éviter la formation de gouttes et de coulures le long du corps 12 lors de l'écoulement du produit par l'orifice 14.

Comme représenté sur les figures 5 et 6, le corps tubulaire 22 du bouchon 20 est fermé à une de ses extrémités par une paroi de fond 46 à partir de laquelle s'étendent, vers l'intérieur du bouchon 20, une première jupe annulaire 48 d'axe X-X et de diamètre extérieur sensiblement égal au diamètre intérieur du bec verseur 42, et une seconde jupe annulaire 50 d'axe X-X et de diamètre plus petit que la première jupe 48. La jupe 48 forme une barrière d'étanchéité pour l'orifice traversant 14 lorsque le bouchon 20 est vissé sur le support 10. La jupe 50 porte, sur sa face extérieure, deux surfaces de rampe 52 en spirale.

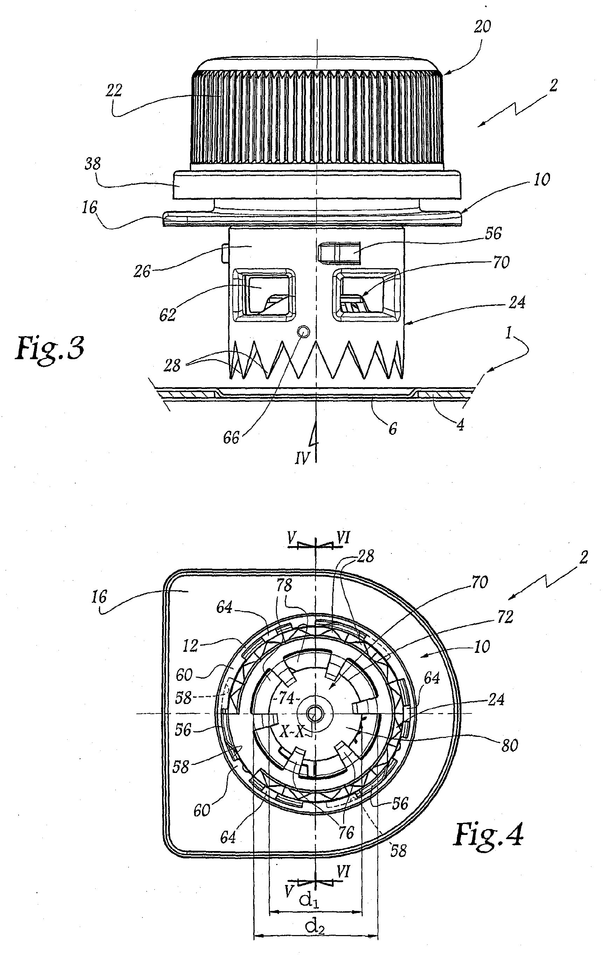

L'organe de découpe 24 est mobile par rapport au support 10 et est adapté, lors du premier dévissage du bouchon 20, pour être entraîné essentiellement suivant un mouvement sensiblement rectiligne de translation par rapport au support 10, notamment lors du découpage de la partie détachable ou sécable 6. A cet effet, son corps tubulaire 26 présente d'une part, sur sa face intérieure, deux surfaces de contre-rampe 54 sensiblement complémentaires des surfaces de rampe 52 du bouchon, et d'autre part, sur sa face extérieure, des ergots en saillie 56 adaptés pour être reçus dans des rainures longitudinales 58 délimitées par des renflements de matière 60 en forme de L et radialement en saillie de la face interne du corps 12 du support 10. Ces renflements s'étendent suivant une direction parallèle à l'axe X-X. De la sorte, lorsque le dispositif 2 est solidaire de la paroi 4 de l'emballage, comme sur la figure 6, et que le bouchon 20 est dévissé pour la première fois, le déplacement en rotation du bouchon est transmis à l'organe de découpe 24, par la coopération des surfaces de rampe 52 et de contre-rampe 54, entraînant le déplacement de l'organe de découpe dans une direction opposée à celle du déplacement du bouchon. Dans la mesure où un jeu angulaire de quelque degrés, de l'ordre de 15° par exemple, existe initialement entre les ergots 56 et leurs renflements associés 60, l'organe de découpe est d'abord entraîné suivant un court mouvement de rotation contraire à celui du bouchon (dans le sens horaire sur la figure 4). Lorsque les ergots se retrouvent en butée contre les renflements 60, la coopération des ergots 56 et des rainures 58 assure le guidage de l'organe de découpe 24 selon un mouvement de translation sensiblement rectiligne suivant l'axe X-X, provoquant le détachement partiel de la partie de paroi circulaire 6 du reste de la paroi 4 sous l'action des dents 28. En fin de course, de l'organe de découpe les ergots 56 viennent en appui sur le chant de parties 60A de faible longueur axiale appartenant aux renflements 60 en forme de L.

De manière connue en soi, le corps 26 de l'organe de découpe 24 est percé radialement de trous de vidange 62, destinés à permettre l'écoulement de sensiblement la totalité du produit restant dans l'emballage 1 en fin d'utilisation de ce dernier.

Avant la solidarisation du dispositif à l'emballage 1, l'organe de découpe 24 est relié au support 10 par des pontets sécables 64, visibles sur la figure 4. Le support 10 et l'organe de découpe 24 sont alors dans une configuration pré-assemblée, telle que représentée sur les figures 2 à 5, dans laquelle l'organe de découpe s'étend axialement en saillie du support du côté opposé au bouchon 20. Comme expliqué dans le document EP-A-1 088 764 cité dans le préambule, une telle configuration pré-assemblée est avantageusement obtenue par un moulage unique du support et de l'organe de découpe.

Par suite de la rupture de ces pontets 64 et du déplacement en translation rectiligne suivant l'axe X-X de l'organe de découpe 24, vers l'intérieur du corps 12 du support 10, les dents 28 sont amenées en retrait, vers le dispositif 2, par rapport à un plan P de solidarisation de la platine 16 à l'emballage 1, comme représenté sur la figure 6. Pour s'assurer que les dents 28 restent bien en retrait de ce plan lors de la manipulation du dispositif 2 avant sa solidarisation à l'emballage 1, la face extérieure du corps 26 de l'organe de découpe est pourvue de tétons saillants 66 adaptés pour s'appuyer sur le chant de renflements 61 de forme parallélépipédiques et s'étendant, de manière analogue aux renflements 60, en saillie de la face interne du corps 12 et suivant une direction globalement parallèle à l'axe X-X. Ces renflements ne s'étendent que sur une partie de la longueur axiale du corps 12, depuis l'extrémité de cette dernière côté platine 16. La souplesse de l'organe de découpe permet de pouvoir faire passer en force les tétons 66 le long de ces renflements 61, lors du déplacement de cet organe à l'intérieur du support 10. De plus, la dimension circonférentielle des renflements 61 est telle que le court mouvement initial d'entraînement en rotation de l'organe de découpe 24 par rapport au support 10 dégage angulairement les tétons 66 des renflements 61 pour qu'ils ne gênent pas le mouvement ultérieur de translation provoquant la découpe de la partie de paroi 6.

Le dispositif d'ouverture 2 comporte en outre un régulateur de débit 70 solidarisé à l'organe de découpe 24. Plus précisément, le régulateur 70 comporte un corps 72 formé d'un disque plein 74 d'axe X-X axialement en retrait des dents 28, et de branches 76 reliant rigidement le disque 74 à la face intérieure du corps 26 de l'organe 24. Le corps 72 forme de la sorte, entre deux branche successives, plusieurs ouvertures 78. Selon la position de l'emballage 1 par rapport au liquide qu'il contient lorsque l'utilisateur déverse ce liquide, au moins une de ces ouvertures 78 forme un passage d'écoulement du liquide vers l'orifice traversant 14, et au moins une autre de ces ouvertures forme un évent pour l'air remplaçant à l'intérieur de l'emballage le liquide sortant.

Le disque 74, forme une face 80 de retenue du liquide, adaptée pour limiter la formation de turbulences dans l'écoulement sortant. A cet effet, la dimension radiale maximale du disque 74 est choisie en fonction de la viscosité du liquide. Dans le cas de l'huile alimentaire, le diamètre d₁ de ce disque est avantageusement au moins supérieur à la moitié du diamètre intérieur d₂ de l'organe de découpe 24.

De plus, dans la mesure où le disque 74 est logé à l'intérieur du corps 26 de l'organe 24, il est mécaniquement protégé par ce corps 26, sans pour autant former une gêne aux dents 28 lors du détachement partiel de la partie de paroi 6.

Pour fabriquer le dispositif 2, il convient d'une part de former le bouchon 20 par une opération de moulage connue en soi, et de mouler d'autre part l'ensemble formé du support 10 et de l'organe de découpe 24 reliés par les pontets sécables 64 comme indiqué précédemment. Le moulage de cet ensemble est réalisé au moyen d'un moule d'injection unique, avec avantageusement le moulage simultané du régulateur de débit 70. L'injection de la matière plastique est alors réalisée au niveau du centre du disque 74, provoquant en fin d'injection la formation d'un renflement sensiblement cylindrique 82 d'axe X-X.

Le démoulage de cet ensemble moulé est obtenu en appliquant une force de poussée orientée vers l'organe de découpe et répartie sensiblement uniformément sur la périphérie de la collerette 34, comme indiqué par les flèches référencées D sur les figures 2 et 5. Il convient de remarquer que la zone d'application de ces efforts de démoulage se distingue de celle couramment employée dans le domaine du moulage des dispositifs d'ouverture en matière plastique. En effet, il est admis qu'il est préférable d'appliquer de tels efforts de démoulage sur les parties de l'ensemble à démouler les plus rigides. A titre d'exemple, pour le dispositif décrit dans le document EP-A-1 088 764, la zone d'application des efforts de démoulage est située sur le chant d'extrémité du support. Pour le.dispositif 2, la présence du bec verseur 42 au niveau de la partie d'extrémité libre du support 10 interdit l'application de tels efforts, sauf à prendre le risque de détériorer de manière irréversible la forme de la lèvre anti-goutte 44. Bien que l'application des efforts D sur la collerette 34 tend à déformer sensiblement radialement vers l'intérieur le corps 12 du support 10, elle n'est pas dommageable à la géométrie de la face intérieure de ce corps 12, cette face ne présentant aucune surface de contre-dépouille susceptible d'empêcher le démoulage de l'ensemble, telle que des bombements ou des cavités formés suivant une direction périphérique au corps 12.

La mise en place du dispositif 2 sur l'emballage 1 s'effectue de la façon suivante: Avant de solidariser la platine 16 à la paroi 4 de l'emballage 1, les pontets 64 sont rompues et l'organe de découpe 24 est amené par un mouvement de translation rectiligne suivant l'axe X-X à l'intérieur du support 10, jusqu'à sa position de la figure 6. Les pontets sécables 64 assurent le positionnement angulaire relatif correct entre l'organe de découpe 24 et le support 10. Les tétons 66 retiennent l'organe de découpe dans cette position tant que ce dernier n'est pas entraîné en rotation par le bouchon 20, comme expliqué précédemment, Ainsi, même lors du transport et/ou de la manipulation du dispositif 2 avant sa première sollicitation d'ouverture, les dents 28 demeurent à distance à la face extérieure de la partie détachable au sécable 6.

Le bouchon 20 est quand à lui fixé au support 10 en lui appliquant une pression axiale, après avoir positionné ce bouchon dans une position angulaire prédéterminée par rapport à l'organe de découpe 24, de telle sorte que les surfaces de rampe 52 et de contre-rampe 54 se retrouvent sensiblement en contact non pressant les unes des autres et que la bague 38 s'immobilise axialement au. niveau de la collerette 34 du corps 12 du support 10.

La fixation du bouchon 20 sur le support 10 est effectuée en même temps que ou après la mise en place de l'organe de découpe 24 à l'intérieur du corps tubulaire 12 du support 10.

A la fin des opérations de mise en place décrites ci-dessus, le support 10, le bouchon 20 et l'organe de découpe 24 sont solidarisés à la paroi 4, de façon coaxiale à la partie de paroi circulaire 6, et assurent la fermeture étanche de l'emballage 1, comme représenté sur les figures 1 et 6.

L'actionnement du dispositif 2 ainsi solidarisé conduit à l'ouverture de l'emballage 1. Le dévissage du bouchon 20 provoque à la fois la libération de la bague témoin de première utilisation 38 et le déplacement de l'organe de découpe 24 par rapport au support 10, en détachant au moins partiellement la partie de paroi 6.

L'emballage 1 peut ensuite être refermé en revissant le bouchon 20 sur le support 10.

Le bec verseur 42 du dispositif d'ouverture refermable 2 permet de déverser proprement des liquides graisseux, visqueux et/ou gluants, sans provoquer la formation de coulures le long de l'emballage 1. La présence du régulateur de débit 70 limite la formation de turbulences dans l'écoulement du produit.

De plus, le dispositif ainsi formé n'est constitué, avant assemblage, que du bouchon 20 et de l'ensemble moulé pré-assemblé formé du support 10, de l'organe de découpe 24 et du régulateur 70, réduisant les coûts de fabrication et d'assemblage du dispositif.

Diverses variantes et aménagements au dispositif et au procédé de moulage décrits ci-dessus sont envisageables. A titre d'exemple, les moyens de guidage en translation sensiblement rectiligne peuvent être inversés, c'est-à-dire que, contrairement au dispositif 2 décrit en regard des figures précédentes, des ergots sont formés sur la surface interne du corps du support, en prenant garde à ne pas former de surfaces de contre-dépouille, et des rainures longitudinales associées sont formées sur la face externe du corps de l'organe de découpe. De même, la retenue partielle du liquide déversé assurée par le régulateur de débit peut être obtenue par d'autres géométries intérieures du corps du régulateur. Ainsi, le disque 74 décrit ci-dessus peut être remplacé par une sphère, un anneau, un tamis, etc ...

## Revendications

1. Dispositif d'ouverture refermable pour un emballage étanche (1) destiné à contenir un produit liquide, du type comprenant :
- un support (10) qui délimite un orifice traversant (14) et qui est adapté pour être solidarisé à une paroi (4) de l'emballage (1) en recouvrant une partie (6) détachable ou sécable de cette paroi,
- un bouchon (20) adapté pour être fixé de manière amovible au support (10) de façon à obturer l'orifice, et
- un organe de découpe (24) de forme sensiblement tubulaire, qui comporte des moyens de découpe (28) et qui, en fonctionnement, est déplaçable par rapport au support (10) de façon à faire coopérer les moyens de découpe et la partie (6) détachable ou sécable de l'emballage (1) pour mettre en communication l'intérieur de l'emballage et l'orifice traversant (14),
le support (10) et l'organe de découpe (24) étant moulés d'un seul tenant dans une configuration pré-assemblée dans laquelle le support et l'organe de découpe sont reliés l'un à l'autre par des moyens de liaison sécables (64),
**caractérisé en ce qu'**il comporte un bec verseur (42) formé par un chant du support (10) et un régulateur de débit (70) logé à l'intérieur de l'organe de découpe (24).

2. Dispositif suivant la revendication 1, **caractérisé en ce qu'**il comporte en outre des moyens (52, 54, 56, 58) d'entraînement de l'organe de découpe (24) par rapport au support (10) sur une course comprenant, d'une part, un premier mouvement de rotation autour de l'axe longitudinal (X-X) de l'organe de découpe et, d'autre part, un second mouvement de translation sensiblement rectiligne.

3. Dispositif suivant la revendication 2, **caractérisé en ce que** le premier mouvement de rotation de la course d'entraînement de l'organe de découpe (24) par rapport au support (10) fait passer l'organe de découpe d'une première position dans laquelle cet organe est retenu, suivant son axe longitudinal (X-X), par coopération d'une partie (66) de sa face extérieure avec une partie (61) de la face intérieure du support (10), à une deuxième position décalée angulairement par rapport à la première et dans laquelle l'organe de découpe est déplaçable en translation suivant cet axe.

4. Dispositif suivant l'une des revendications 2 ou 3, **caractérisé en ce que** les moyens d'entraînement comportent des moyens (52, 54) de transmission de mouvement interposés entre le bouchon (20) et l'organe de découpe (24), et des moyens (56, 58) de guidage en translation interposés entre l'organe de découpe (24) et le support (10).

5. Dispositif suivant la revendication 4, **caractérisé en ce que** les moyens de transmission comportent au moins une surface de rampe (52) portée par le bouchon (20) et au moins une surface de contre-rampe (54) portée par la face intérieure de l'organe de découpe (24) et sensiblement complémentaire de la surface de rampe.

6. Dispositif suivant la revendication 4 ou 5, **caractérisé en ce que** les moyens de guidage comportent au moins un ergot saillant (56), solidaire de l'une de la face extérieure de l'organe de découpe (24) et de la face intérieure du corps (12) du support (10), et au moins une rainure (58) formée dans l'autre de ces faces.

7. Dispositif suivant l'une quelconque des revendications précédentes, **caractérisé en ce que** le régulateur de débit (70) comporte un corps (72) qui est relié rigidement à la face intérieure de l'organe de découpe (24), qui forme intérieurement une retenue (74) du liquide et qui comporte au moins deux ouvertures (78) débouchant dans l'orifice traversant (14).

8. Dispositif suivant la revendication 7, **caractérisé en ce que** la dimension radiale maximale (d₁) de la partie formant la retenue partielle (74) du corps (72) du régulateur (70) est supérieure à la moitié du diamètre intérieur (d₂) de l'organe de découpe (24).

9. Dispositif suivant l'une quelconque des revendications précédentes, **caractérisé en ce que**, dans la configuration pré-assemblée, le régulateur de débit (70) est moulé d'un seul tenant avec l'ensemble formé du support (10) et de l'organe de découpe (24).

10. Procédé de moulage d'un dispositif d'ouverture refermable (2) pour un emballage étanche (1) destiné à contenir un produit liquide, ledit dispositif comprenant :
- un support (10) qui délimite un orifice traversant (14), qui est pourvu d'une collerette extérieure (34) de réception d'une bague témoin de première utilisation (38), et qui est adapté pour être solidarisé à une paroi (4) de l'emballage (1) en recouvrant une partie (6) détachable ou sécable de cette paroi ;
- un bouchon (20) adapté pour être fixé de manière amovible au support (10) de façon à obturer l'orifice (14), et
- un organe de découpe (24) de forme sensiblement tubulaire, qui comporte des moyens de découpe (28) et qui, en fonctionnement, est déplaçable par rapport au support (10) de façon à faire coopérer les moyens de découpe et une partie (6) détachable et sécable de l'emballage (1) pour mettre en communication l'intérieur de l'emballage et l'orifice traversant (14),
procédé dans lequel on moule d'une seul tenant dans une configuration pré-assemblée le support (10) et l'organe de découpe (24) en les reliant par des moyens de liaison sécables (64),
**caractérisé en ce que**, durant le moulage, on conforme un chant du support (10) en un bec verseur (42), et **en ce qu'**on démoule le support (10) et l'organe de découpe (24) dans la configuration pré-assemblée en exerçant des efforts (D) sur la collerette extérieure (34) du support (10).

11. Procédé suivant la revendication 10, **caractérisé en ce qu'**on moule, dans la configuration pré-assemblée, à la fois le support (10), l'organe de découpe (24) et un régulateur de débit (70) logé à l'intérieur de l'organe de découpe (24) .

12. Procédé suivant la revendication 11, **caractérisé en ce qu'**on moule à la fois le support (10), l'organe de découpe (24) et le régulateur de débit (70) par injection de matière plastique au centre du régulateur.
